# EUROPEAN PATENT SPECIFICATION

(11) **EP 1 683 617 B1**
(45) Date of publication and mention of the grant of the patent: **21.08.2013**
(21) Application number: 06394002.7
(22) Date of filing: 20.01.2006
(51) Int. Cl.: B29C 44/12, B29C 44/44, B29C 44/60, E04B 1/14

(54) **Manufacture of structural panels**
Herstellung von Bauplatten
Procédé pour la fabrication des panneaux de construction

(30) Priority: 21.01.2005 IE 20050022; 04.10.2005 IE 20050668
(43) Date of publication of application: 26.07.2006
(73) Proprietor: Salvesen Insulated Frames Limited, St. James Northampton NN5 5LH (GB)
(72) Inventor: Fleming, John Joseph, Bandon, County Cork (IE)
(74) Representative: Hedges, Martin Nicholas

(56) References cited:
- GB-A- 1 335 496
- JP-A- 6 238 761
- JP-A- 10 061 061
- US-A- 4 674 250
- US-A- 5 350 546
- US-B1- 6 332 304

## Description

### Introduction

The invention relates to manufacture of structural panels.

Our prior art European Patent Specification No. EP1217141 describes a structural panel comprising a structural frame of interconnected structural members and an integrally moulded EPS insulation.

US4674250 also describes moulding of insulation into a structural panel. In this approach, blanking pieces are used to blank out parts of the panel to be free of insulation, such as window opes. This approach is time-consuming and is expensive in terms of manufacturing materials used.

JP06238761 describes filling a panel frame with resin particles to foam the resin particles under heating.

The invention is therefore directed towards providing for more efficient manufacture of insulated structural panels.

### SUMMARY OF THE INVENTION

According to the invention, there is provided a method as set out in claim 1 of manufacturing an integrally insulated structural panel.

In one embodiment, the insulation is injected in the form of beads and steam is also injected to cause them to bond.

In another embodiment, the beads are pre-expanded EPS beads.

In one embodiment, the ducts are in a mould top cover.

In another embodiment, the depth of the mould is greater than the depth of the structural frame, the insulation being injected from above the frame, and the frame lying on a base of the mould.

In a further embodiment, a plurality of frames are simultaneously moulded.

In one embodiment, a mould controller automatically selects an insulation injection configuration according to control code, and controls the insulation injection accordingly.

In another embodiment, the mould comprises a plurality of insulation injection ducts, and the controller controls valves to the ducts for selective injection.

In a further embodiment, each duct has a dedicated valve.

In one embodiment, the method comprises the step of setting a volume for the mould.

In another embodiment, the volume is set by moving a boom which forms a mould cavity side wall to a desired position.

In a further embodiment, the boom is driven by a ram.

In one embodiment, the boom is of adjustable length.

In another embodiment, a second side wall is moved to define the volume in an orthogonal dimension.

In a further embodiment, the boom is driven to push the frames against an end stop.

In one embodiment, the method comprises the further step of adhering a solid layer of insulation to the frame.

In another embodiment, the layer is adhered after the moulded insulation has cured, and the insulation of the solid layer has different characteristics from the moulded insulation.

In a further embodiment, the method comprises the further steps of moulding insulation in two stages, each stage using different gauge insulation.

In one embodiment, the moulding is controlled by a moulding controller operating according to code generated automatically by a production controller from user graphical inputs.

In another embodiment, the production controller generates a discrete data processing object representing each panel, according to pre-stored code and data and user-inputted panel attributes.

In a further embodiment, the production controller tests the objects by automatically testing interconnection criteria.

In one embodiment, the production controller generates intermediate code representing each frame manufacturing operation, and uses said code to generate the moulding controller code and roll-forming machine code.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a diagrammatic cross-sectional side view of a moulding system in operation;
Fig. 2 is an underneath plan view of a mould cover;
Fig. 3 is a perspective view of closure clamps;
Fig. 4 is a plan view of the base of the moulding system; and
Fig. 5 is a flow diagram of pre-moulding operations.

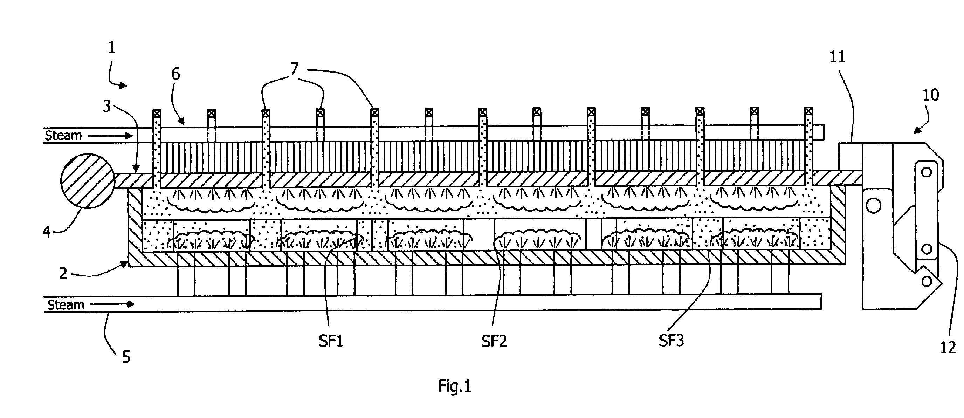

Referring to Figs. 1 to 3 a moulding system 1 is shown in use moulding a number of structural frames SF1, SF2, and SF3 as part of a method for manufacturing insulated structural panels. Fig. 1 is a view across the width of the system, being c.4 m, the length being c. 6m.

The system 1 comprises a mould base 2 of shallow configuration, having sufficient depth to accommodate a structural frame plus an additional depth for insulation only. Thus, the end product is integrally moulded with EPS insulation across the depth of the frame plus c.30 mm for a "warm" layer to avoid cold bridging across the structural frame in use. A mould cover 3 is in the form of a flat plate and is hinged at a hinge 4 to directly overlie the base 2 when in use.

Steam supply grids 5 and 6 are mounted below the base 2 and above the cover 3 for delivery of steam to 2 mm x 40 mm slits 15 in both the base 2 and the cover 3.

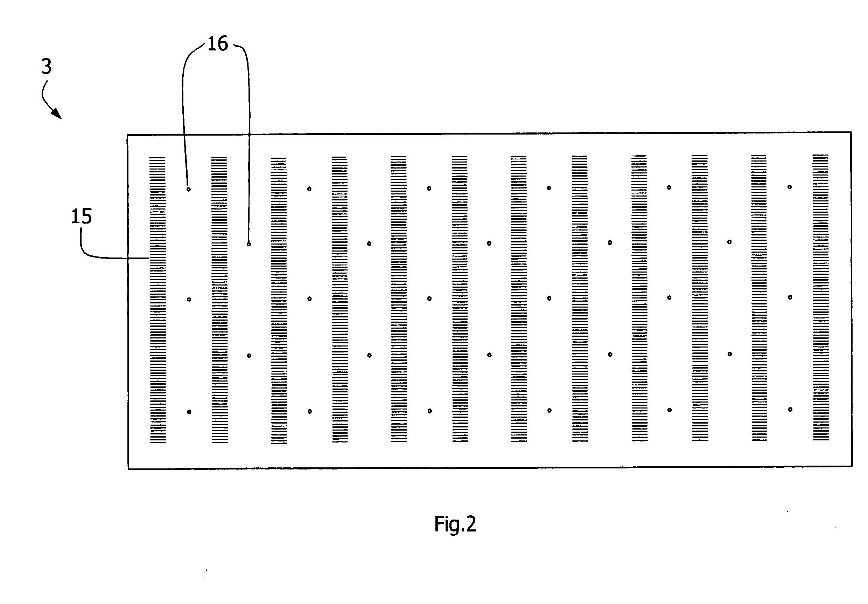

A bead supply grid delivers pre-expanded EPS beads from a storage hopper to an array of ducts 16 in the lid 3. The ducts 16 are individually controlled by valves 7. As shown in Fig. 2 the arrangement of the ducts 16 is such that every alternate row is offset, thereby providing for uniform distribution throughout the mould cavity.

The moulding system 1 also comprises a computerised controller, not shown.

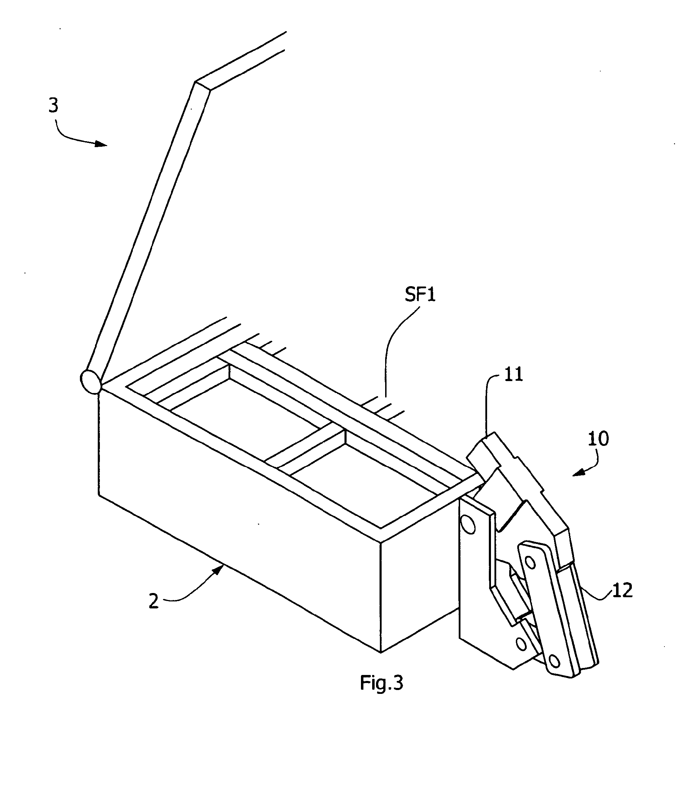

As shown in Fig. 3, a clamping mechanism 10 has an hydraulic actuator which moves a series of clamp arms 11 along the length of the cover 3 between a clamping position shown in Fig. 1 to an open position shown in Fig. 3. Large clamping forces are applied when a knuckle joint arm 12 is in the closed position.

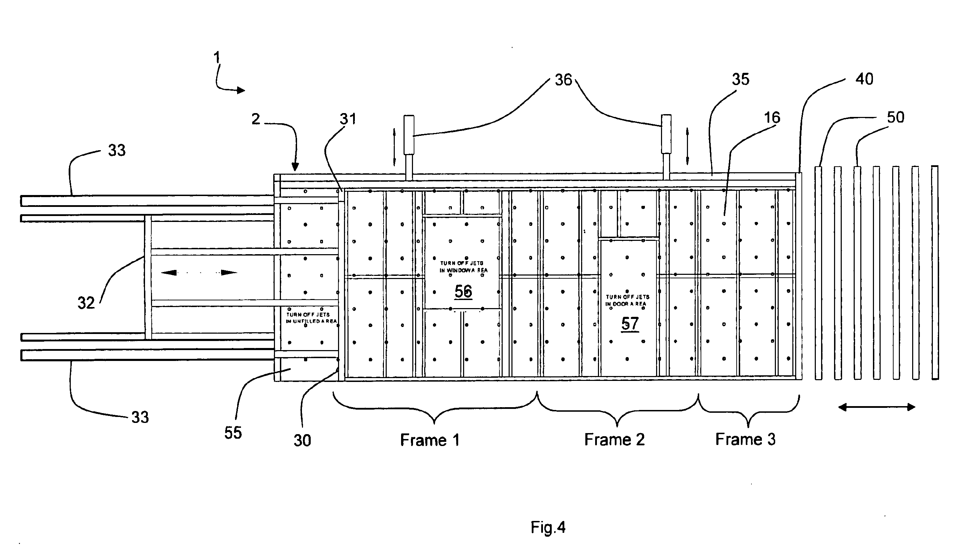

The view of Fig. 4 shows how frames are fed into the mould base and are fed out after moulding. This drawing shows a boom 30 having a removable extension piece 31 so that its length is variable. The boom 30 moves in the left-right direction as viewed in this drawing, in a horizontal plane. Its movement is guided by a guide 32 and it is driven by rams 33. There is also a back cover 35 for the mould cavity, driven in the top at 90° also in a horizontal plane by rams 36. The maximum extent of movement of the back cover 35 is determined by the length of the boom 30. There is also an end cover 40 which opens and closes.

Assembled structural frames are loaded and unloaded on rollers 50 through the end of the mould cavity when the end cover 40 is open.

The drawing shows three structural frames, called Frame 1, Frame 2, and Frame 3. Spaces where the EPS inlets 16 are to be turned off are indicated as 55, 56, and 57. This avoids injection of beads into the unused mould cavity space (55), in a window area of a frame (56), and in a door area of a frame (57).

In operation, a number of structural frames are placed in the mould base 2, with optimum use of space. The design data for the frames is fed to the system controller. The operator also inputs the configuration of frames on the base 2. The controller then automatically chooses which ducts 16 are not to be used, corresponding to locations where there are to be opes in the end-product structural panels. The controller controls the valves 7 accordingly. This is illustrated in Fig. 1, in which some ducts 16 are not injecting beads.

The controller then controls pumps and a boiler to simultaneously inject pre-expanded EPS beads through the selected ducts 16 into the cover 3, and steam through all of the slits 15 in both the base 2 and the cover 3. The beads immediately adhere together to form a complete insulation layer throughout the frames except where there are openings or other spaces where insulation is not desired. This is caused by reaction of the steam with the beads.

The cover 3 is then opened and the insulated panels are conveyed to a storage area where the insulation completely cools and solidifies.

The following sets out the major steps for handling of the structural frames.
- The frames are loaded into the mould base 2 on the rollers 50.
- The end cover 40 closes.
- The boom 30 pushes the loaded frames back against the end cover 40.
- The back rams 36 close the back cover 35 to the size of the adjustable boom 30 length.
- The redundant jets are turned off.
- The top cover 3 is closed.
- EPS and Steam are injected into the mould cavity.
- The top cover 3 opens.
- The end cover 40 opens.
- The boom 30 ejects the panels onto the rollers 50.

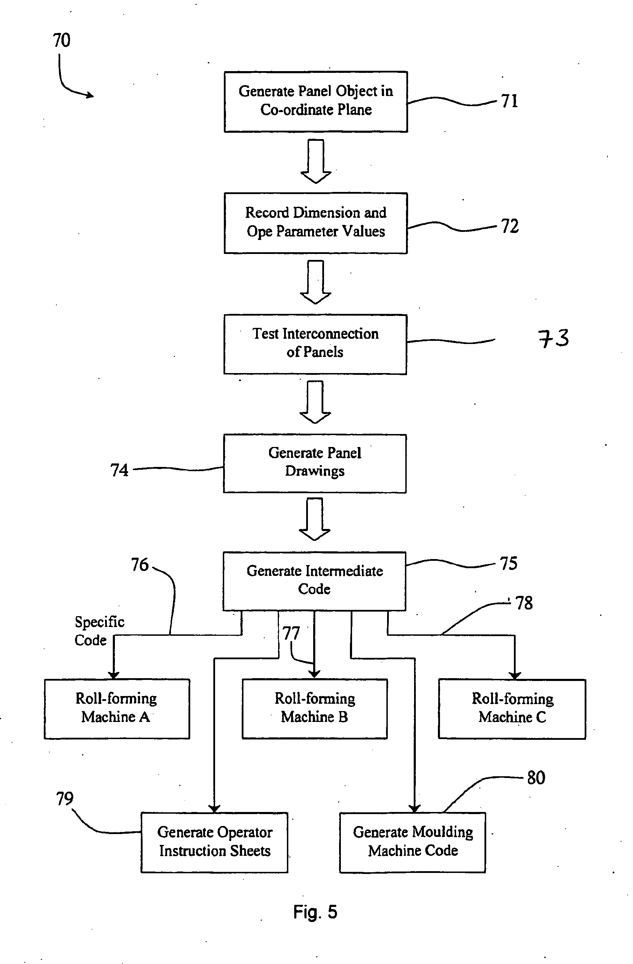

Referring to Fig. 5 a method 70 is illustrated for the manufacturing steps leading up to moulding. A computerized production controller implements steps 71 to 80. Step 71 is generation of panel objects comprising code and attributes for each discrete panel. There is a very powerful graphical user interface allowing the user to graphically input dimensions and opening parameter values in step 72. The production controller automatically completes a discrete object for each panel, and in step 73 tests interconnection of the panels to complete a building. Drawings of the individual panels and of the full structure are generated in step 74, and the full set of objects is used to generate "intermediate" or universal code in step 75 for controlling the machines. The format of the code is:
- multiple sequences, one sequence per panel part;
- each sequence having one or more instructions, each instruction being for an individual operation such as punch, punch and dimple, shear, ink-jet print on part (operator information such as project number, panel number, and part identifier).

The intermediate code is parsed by the controller to generate in steps 76, 77 and 78 specific NC (numerical control) code for roll-forming machines A, B, and C respectively. It also parses the intermediate code to generate operator instruction sheets in step 79 and moulding machine control code in step 80. The latter is used to control the moulding operations as described above. The intermediate code is also used to generate the following:-
- Pricing information for purchasing and sales offices.
- Offline lists for ancillary wall fittings, such a lintel plates, timber battens, wallplates, etc. that are prepared and fitted to the panels during assembly.

It will be appreciated that the invention provides for very efficient use of human and equipment resources, without sacrificing a versatility in panel design.

The invention is not limited to the embodiments described but may be varied in construction and detail within the scope of the claims. For example, instead of forming the additional "warm" insulation layer in the mould, this may be adhered afterwards using a compatible adhesive to give the same effect as if the layer were formed in the mould. In this embodiment the "warm" layer of insulation may be of a different density or have different other characteristics chosen for the intended use.

## Claims

1. A method of manufacturing an integrally insulated structural panel, the method comprising the steps of:
fabricating a structural frame (SF1);
placing the frame in a mould (2), and selectively injecting insulation material into the mould, and
allowing the insulation to cure, **characterized in that**,
the insulation is injected through selected ducts in an array of ducts (16) in a mould wall to leave some parts of the frame free of insulation.

2. A method as claimed in claim 1, wherein the insulation is injected in the form of beads and steam is also injected (15) to cause said beads to bond.

3. A method as claimed in claims 1 or 2, wherein the beads are pre-expanded EPS beads.

4. A method as claimed in any preceding claim, wherein the ducts (16) are in a mould top cover (3).

5. A method as claimed in any preceding claim, wherein the depth of the mould (2) is greater than the depth of the structural frame, the insulation being injected from above the frame, and the frame lying on a base of the mould.

6. A method as claimed in any preceding claim, wherein a plurality of frames are simultaneously moulded.

7. A method as claimed in any preceding claim, wherein a mould controller automatically selects an insulation injection configuration according to control code, and controls the insulation injection accordingly.

8. A method as claimed in claim 7, wherein the mould comprises a plurality of insulation injection ducts (16), and the controller controls valves (7) to the ducts for selective injection.

9. A method as claimed in claim 8, wherein each duct has a dedicated valve (7).

10. A method as claimed in any preceding claim, comprising the step of.setting a volume for the mould.

11. A method as claimed in claim 10, wherein the volume is set by moving a boom (30) which forms a mould cavity side wall to a desired position.

12. A method as claimed in claim 11, wherein the boom is driven by a ram (33).

13. A method as claimed in claims 11 or 12, wherein the boom (30) is of adjustable length (31).

14. A method as claimed in any of claims 11 to 13, wherein a second side wall (35) is moved to define the volume in an orthogonal dimension.

15. A method as claimed in any of claims 11 to 14, wherein the boom (30) is driven to push the frames against an end stop (40).

16. A method as claimed in any preceding claim, comprising the further step of adhering a solid layer of insulation to the frame.

17. A method as claimed in claim 16, wherein the layer is adhered after the moulded insulation has cured, and the insulation of the solid layer has different characteristics from the moulded insulation.

18. A method as claimed in any preceding claim, comprising the further steps of moulding insulation in two stages, each stage using different gauge insulation.

19. A method as claimed in any preceding claim, wherein the moulding is controlled by a moulding controller operating according to code generated (80) automatically by a production controller from user graphical inputs.

20. A method as claimed in claim 19, wherein the production controller generates (71) a discrete data processing object representing each panel, according to pre-stored code and data and user-inputted panel attributes.

21. A method as claimed in claim 20, wherein the production controller tests (73) the objects by automatically testing interconnection criteria.

22. A method as claimed in claims 20 or 21, wherein the production controller generates (75) intermediate code representing each frame manufacturing operation, and uses said code to generate (80) the moulding controller code and roll-forming machine code (76-78).

## Patentansprüche

1. Verfahren zur Herstellung einer integral isolierten Bauplatte, wobei das Verfahren die folgenden Schritte umfasst:
Herstellen eines strukturellen Rahmens (SF1);
Platzieren des Rahmens in eine Form (2) und selektives Einspritzen von Isoliermaterial in die Form, und
Härtenlassen der Isolierung, **dadurch gekennzeichnet, dass**
die Isolierung durch ausgewählte Kanäle in einer Anordnung von Kanälen (16) so in eine Wand der Form gespritzt wird, dass einige Teile des Rahmens frei von Isolierung gelassen werden.

2. Verfahren nach Anspruch 1, bei welchem die Isolierung in Form von Kügelchen eingespritzt wird und auch Dampf eingespritzt (15) wird, um zu bewirken, dass die benannten Kügelchen aneinander kleben.

3. Verfahren nach den Ansprüchen 1 oder 2, bei welchem die Kügelchen vorexpandierte EPS-Perlen sind.

4. Verfahren nach einem beliebigen der vorhergehenden Ansprüche, bei welchem sich die Kanäle (16) in einer oberen Abdeckung (3) der Form befinden.

5. Verfahren nach einem beliebigen der vorhergehenden Ansprüche, bei welchem die Tiefe der Form (2) größer als die Tiefe des strukturellen Rahmens ist, wobei die Isolierung von oberhalb des Rahmens eingespritzt wird und der Rahmen auf einem Boden der Form liegt.

6. Verfahren nach einem beliebigen der vorhergehenden Ansprüche, bei welchem eine Vielzahl von Rahmen gleichzeitig geformt werden.

7. Verfahren nach einem beliebigen der vorhergehenden Ansprüche, bei welchem eine Form-Steuereinheit automatisch einem Steuercode entsprechend eine Einspritzkonfiguration für die Isolierung auswählt und das Einspritzen der Isolierung entsprechend steuert.

8. Verfahren nach Anspruch 7, bei welchem die Form eine Vielzahl von Isolierungseinspritzkanälen (16) umfasst und die Steuereinheit für die selektive Einspritzung Ventile (7) zu den Kanälen steuert.

9. Verfahren nach Anspruch 8, bei welchem jeder Kanal über ein ihm fest zugeordnetes Ventil (7) verfügt.

10. Verfahren nach einem beliebigen der vorhergehenden Ansprüche, bestehend aus dem Schritt des Einstellens eines Volumens für die Form.

11. Verfahren nach Anspruch 10, bei welchem das Volumen durch Bewegen eines eine Seitenwand des Formhohlraums bildenden Auslegers (30) in eine gewünschte Position eingestellt wird.

12. Verfahren nach Anspruch 11, bei welchem der Ausleger von einem Stößel (33) angetrieben wird.

13. Verfahren nach den Ansprüchen 11 oder 12, bei welchem der Ausleger (30) von einstellbarer Länge (31) ist.

14. Verfahren nach einem beliebigen der Ansprüche 11 bis 13, bei welchem eine zweite Seitenwand (35) bewegt wird, um das Volumen in rechtwinkeliger Dimension abzugrenzen.

15. Verfahren nach einem beliebigen der Ansprüche 11 bis 14, bei welchem der Ausleger (30) angetrieben ist, um die Rahmen gegen einen Endanschlag (40) zu drücken.

16. Verfahren nach einem beliebigen der vorhergehenden Ansprüche, umfassend den weiteren Schritt des Festklebens einer festen Isolierschicht an den Rahmen.

17. Verfahren nach Anspruch 16, bei welchem die Schicht angeklebt wird, nachdem die geformte Isolierung ausgehärtet ist, und bei welchem die Isolierung der festen Schicht Merkmale aufweist, die zu denen der geformten Isolierung unterschiedlich sind.

18. Verfahren nach einem beliebigen der vorhergehenden Ansprüche, bestehend aus dem weiteren Schritt der Formung der Isolierung in zwei Stufen, wobei in jeder Stufe Isolierung von unterschiedlicher Dicke verwendet wird.

19. Verfahren nach einem beliebigen der vorhergehenden Ansprüche, bei welchem die Formung durch eine Formgebungssteuereinheit gesteuert wird, welche einem Code entsprechend operiert, der automatisch durch eine Produktionssteuereinheit aus grafischen Eingaben von Benutzern generiert (80) wird.

20. Verfahren nach Anspruch 19, bei welchem die Produktionssteuereinheit einem vorher gespeicherten Code und vorher gespeicherten Daten sowie von Benutzern eingegebenen Plattenmerkmalen entsprechend ein diskretes Datenverarbeitungsobjekt generiert (71), welches jede Platte darstellt.

21. Verfahren nach Anspruch 20, bei welchem die Produktionssteuereinheit die Gegenstände durch automatische Prüfung der gegenseitigen Verbindungskriterien prüft (73).

22. Verfahren nach den Ansprüchen 20 oder 21, bei welchem die Produktionssteuereinheit einen Zwischencode generiert (75), welcher jeden Rahmenherstellungsvorgang darstellt, und den benannten Code benutzt, um den Code für die Formgebungssteuereinheit und den Code für die Walzenformungsmaschine (76 - 78) zu generieren (80).

## Revendications

1. Procédé de fabrication d'un panneau de construction intégralement isolé, le procédé comprenant les étapes consistant à :
fabriquer un cadre de construction (SF1) ;
placer le cadre dans un moule (2), et injecter sélectivement un matériau d'isolation dans le moule, et
laisser l'isolation durcir, **caractérisé en ce que**,
l'isolation est injectée à travers des conduits sélectionnés dans une matrice de conduits (16) dans une paroi du moule pour laisser certaines parties du cadre sans isolation.

2. Procédé selon la revendication 1, dans lequel l'isolation est injectée sous forme de billes et de la vapeur est aussi injectée (15) pour faire en sorte que les billes adhèrent les unes aux autres.

3. Procédé selon la revendication 1 ou 2, dans lequel les billes sont des billes d'EPS pré-expansé.

4. Procédé selon l'une quelconque des revendications précédentes, dans lequel les conduits (16) se trouvent dans un couvercle supérieur de moule (3).

5. Procédé selon l'une quelconque des revendications précédentes, dans lequel la profondeur du moule (2) est supérieure à la profondeur du cadre de construction, l'isolation étant injectée depuis le dessus du cadre, et le cadre reposant sur une base du moule.

6. Procédé selon l'une quelconque des revendications précédentes, dans lequel plusieurs cadres sont moulés simultanément.

7. Procédé selon l'une quelconque des revendications précédentes, dans lequel un contrôleur de moule sélectionne automatiquement une configuration d'injection d'isolation en fonction d'un code de commande, et commande l'injection de l'isolation en conséquence.

8. Procédé selon la revendication 7, dans lequel le moule comprend une pluralité de conduits d'injection d'isolation (16), et le contrôleur commande des vannes (7) conduisant aux conduits en vue d'une injection sélective.

9. Procédé selon la revendication 8, dans lequel chaque conduit a une vanne dédiée (7).

10. Procédé selon l'une quelconque des revendications précédentes, comprenant l'étape de réglage d'un volume du moule.

11. Procédé selon la revendication 10, dans lequel le volume est réglé en déplaçant jusqu'à une position souhaitée une flèche (30) qui forme un paroi latérale de cavité de moule.

12. Procédé selon la revendication 11, dans lequel la flèche est entraînée par un bélier (33).

13. Procédé selon la revendication 11 ou 12, dans lequel la flèche (30) est d'une longueur réglable (31).

14. Procédé selon l'une quelconque des revendications 11 à 13, dans lequel une seconde paroi latérale (35) est déplacée pour définir le volume dans une dimension orthogonale.

15. Procédé selon l'une quelconque des revendications 11 à 14, dans lequel la flèche (30) est entraînée pour pousser les cadres contre une butée d'extrémité (40).

16. Procédé selon l'une quelconque des revendications précédentes, comprenant l'étape supplémentaire de collage d'une couche d'isolation solide sur le cadre.

17. Procédé selon la revendication 16, dans lequel la couche est collée après le durcissement de l'isolation moulée, et l'isolation de la couche solide a des caractéristiques différentes de celles de l'isolation moulée.

18. Procédé selon l'une quelconque des revendications précédentes, comprenant les étapes supplémentaires de moulage de l'isolation en deux étapes, chaque étape utilisant une isolation de différentes grosseurs.

19. Procédé selon l'une quelconque des revendications précédentes, dans lequel le moulage est commandé par un contrôleur de moulage fonctionnant selon un code généré (80) automatiquement par un contrôleur de production à partir d'entrées graphiques d'utilisateur.

20. Procédé selon la revendication 19, dans lequel le contrôleur de production génère (71) un objet de traitement de données discrètes représentant chaque panneau, en fonction d'un code et de données préstockés et d'attributs de panneau entrés par l'utilisateur.

21. Procédé selon la revendication 20, dans lequel le contrôleur de production teste (73) les objets en testant automatiquement des critères d'interconnexion.

22. Procédé selon la revendication 20 ou 21, dans lequel le contrôleur de production génère (75) un code intermédiaire représentant chaque opération de fabrication de cadre, et utilise ledit code pour générer (80) le code de contrôleur de moulage et le code de machine de formage de rouleaux (76 - 78).
